# EUROPEAN PATENT APPLICATION

(11) **EP 2 738 961 A1**
(43) Date of publication of application: **04.06.2014**
(21) Application number: 12819917.1
(22) Date of filing: 15.05.2012
(51) Int. Cl.: H04H 20/44, H04H 20/47

(54) **SYSTEM FOR CONTROLLING SOUNDS AND IMAGES THROUGH THREE-DIMENSIONAL MATRIX CIRCUIT**

(30) Priority: 29.07.2011 KR 20110075621
(71) Applicant: Academy I&C Co., Ltd., Gyeongsan-si, Gyeongsangbuk-do 712-210 (KR)
(72) Inventor: LEE, Gi Won, Daegu 706-775 (KR)
(74) Representative: Mittler, Enrico
(86) International application number: PCT/KR2012/003808
(87) International publication number: WO 2013/018979

(57) **Abstract**

The preset invention relates to a system for controlling sounds and images through three-dimensional matrix circuit, which outputs voice and sound signals outputted from a sound generator and amplified by a plurality of amplifiers through a plurality of speakers. The system includes a matrix circuit and a controller. The matrix circuit is configured in a three-dimensional type such that the amplifiers and the speakers to which the voice and sound signals outputted from the sound generator are delivered are connected to each other, changing and adding input/output according to a user's selection. The controller controls various kinds of operations of the speakers and the amplifiers by allowing a user to control the matrix circuit by a multicast method so as to select amplifiers or a combination thereof to be used for broadcasting using a keyboard or a mouse.

## Description

### Cross-Reference To Related Application

This application claims the benefit of Korean Patent Application No.10-2011-0075621, filed on July 29, 2011 in the Korean Intellectual Property Office, the disclosure of which is incorporated herein by reference.

### Technical Field

The present invention relates to a system for controlling sounds and images through a three-dimensional matrix circuit, and more particularly, to a system for controlling sounds and images through a three-dimensional matrix circuit, which allows a user to easily control a connection between an amplifier and a speaker and a connection between an image transmission device and a display device by a multicast method in a Graphic User Interface (GUI) environment using the matrix circuit.

### Background Art

Generally, broadcast or sound systems using amplifiers and speakers include one or more speakers to deliver messages to people at their places of a building having a plurality of divided spaces, such as schools, large buildings, and plants.

In order to implement such a sound system, an amplifier and a sound generator (e.g., microphone and audio) for supplying sound signals of an appropriate size through a plurality of speakers are installed, and the plurality of speakers installed at each place are connected to a controller.

The controller of the speaker includes a plurality of input channels and a plurality of output channels, and controls sound signals inputted into the input channels to be transmitted to the speakers through the output channels. In other words, the controller may transmit sounds signals inputted from the input channels such as microphone, DVD player, and audio to all speakers or some speakers.

Also, image equipment such as DVD players or Blueray disc players transmits images to TVs installed at each place inside a building. TVs installed at each place may perform transmission to all channels or an individual channel through a separate control function.

Since interconnections between the input channels and the output channels are manually made by a user, the controller of the speakers is difficult to change or modify the interconnection of the input channels and the output channels.

In order to overcome the above limitation, a matrix circuit has been developed to select a portion of the plurality of amplifiers and speakers necessary for the broadcasting in a typical sound system and connect the portion of the plurality of amplifiers and speakers to a sound source.

A MxN type of matrix circuit allows M amplifiers and N speakers to be connected to each other. A user can control a switch that can select the input or output of the matrix circuit through manual input or Graphical User Interface (GUI) environment to set or control the connection of the amplifiers and the speakers that are necessary.

However, although using this matrix circuit, a user needs to specify the types of the necessary amplifiers and speakers and calculate the number of the necessary amplifiers and speakers in consideration of the output of each amplifier according to the type of the sound source and a desired output group to control the switch of the matrix circuit.

Also, since the sound system of controlling the speakers and amplifiers using the matrix circuit is implemented in a flat type, there is no expandability, and the input and output are fixed, making a variable design of hardware according to the field situation impossible.

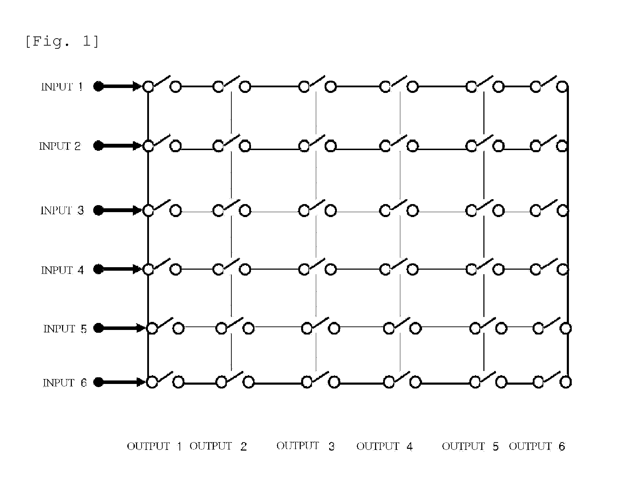

FIG. 1 is a circuit view illustrating an exemplary matrix circuit in a sound system using a typical matrix circuit.

As shown in FIG. 1, in a 6x6 flat matrix circuit, the number of relays (or switches) is 36. The number of inputs and outputs of the matrix circuit increases for desired broadcasting and sound control of a plurality of divided spaces in a building that gradually increases in size. Accordingly, the number of relays also increases more or more, and the size of the circuit also increases.

Accordingly, in order to efficiently control a plurality of speakers and amplifiers installed in divided spaces inside a building that gradually increases in its size, the variable design of hardware according to the field situation is essential, and the input and output of the matrix circuit need to be more variously utilized so as to organically change the connection between the amplifiers and the speakers.

### Disclosure

### Technical Problem

The present invention provides a system for controlling sounds and images through a three-dimensional matrix circuit, which can conveniently and quickly perform a change or modification upon interconnection between amplifiers and speakers and connection of video and audio signals of various image transmission devices to a display device through a plurality of channels due to changeable input and output by manufacturing for the slot-shaped and enables the variable design of hardware according to the field situation.

### Technical Solution

In accordance with an aspect of the present invention, there is provided a system for controlling sounds and images through three-dimensional matrix circuit, which outputs voice or sound signals outputted from a sound generator and amplified by a plurality of amplifiers through a plurality of speakers, the system comprising: a matrix circuit configured in a three-dimensional type such that the amplifiers and the speakers to which the voice or sound signals outputted from the sound generator are delivered are connected to each other, changing and adding input/output according to a user's selection; a controller for controlling various kinds of operations of the speakers and the amplifiers by allowing a user to control the matrix circuit by a multicast method so as to select amplifiers or a combination thereof to be used for broadcasting using a keyboard or a mouse.

In accordance with another aspect of the present invention, there is provided a system for controlling sounds and images through three-dimensional matrix circuit, which outputs image and sound signals outputted from a plurality of image transmission devices through a plurality display devices, the system comprising: a matrix circuit three-dimensionally implementing a connection between the display devices to which the image and sound signals outputted from the image transmission device are delivered and changing and adding input/output according to a user's selection; a controller for controlling operations of the system by allowing a user to control the matrix circuit by a multicast method so as to select a combination of the image transmission devices and the display devices to be used for broadcasting using a keyboard or a mouse.

The system for controlling sounds and images through three-dimensional matrix circuit may include: a power supply for supplying power to the system; a communication unit taking charge of duplex communication with an external device; a plurality of expansion slots taking charge of input/output connection according to a field situation; a main board mounted with various kinds of parts comprising the matrix circuit, the controller, the power supply, and the communication unit and enabling an interconnection and communication of the expansion slots.

The matrix circuit may be manufactured into a slot type, and the plurality of expansion slots taking charge of input/output connection according to a field situation may be mounted with an expansion board, in which a size of the matrix circuit increases or decreases according to a user's selection.

The communication unit taking charge of duplex communication with an external device may check whether or not there is an abnormality of the controller comprising the matrix circuit by performing duplex communication with a personal computer.

### Advantageous effects

Accordingly, a system for controlling sounds and images through a three-dimensional matrix circuit according to an embodiment of the present invention can conveniently and quickly perform a change or modification of interconnection between amplifiers and speakers and connection of video and audio signals of various image transmission devices to a display device through a plurality of channels by including the matrix circuit, can expand the output from any terminal according to the field situation, and can significantly reduce the number of parts by implementing a typical flat matrix circuit into the three-dimensional matrix circuit.

Also, the system for controlling sounds and images through the three-dimensional matrix circuit can more variously utilize the input and the output so as to organically change the connection between the amplifiers and the speakers and the connection between the image transmission device and the display device. Furthermore, the system can be efficiently managed in a Graphical User Interface (GUI) environment, and can also be remotely controlled and managed through Internet connection.

### Brief Description of Drawings

FIG. 1 is a circuit view illustrating an exemplary matrix circuit in a sound system using a typical matrix circuit.
FIG. 2 is a view illustrating the whole configuration of a sound and image control system through a three-dimensional matrix circuit according to an embodiment of the present invention.
FIG. 3 is a side view of FIG. 2.
FIG. 4 is a perspective view illustrating the whole configuration of a three-dimensional matrix circuit according to an embodiment of the present invention.
FIG. 5 is a circuit view illustrating a 6x6 three-dimensional matrix circuit according to an embodiment of the present invention.
FIG. 6 is a circuit view illustrating the front surface of a 6x6 three-dimensional matrix circuit according to an embodiment of the present invention.
FIG. 7 is a circuit view illustrating the rear surface of a 6x6 three-dimensional matrix circuit according to an embodiment of the present invention.

Reference numerals set forth in the Drawings includes reference to the following elements as further discussed below:

| | |
|---|---|
| 10: main board | 20: matrix circuit |
| 30: controller | 40: power supply |
| 50: communication unit | 60: expansion slot |

### Best modes for carryinq out the invention

Since the present invention can be modified into various types, exemplary embodiments will be illustrated in the drawings and described in this disclosure in detail. However, the present invention is not limited to a specific disclosure type, but should be construed as including all modifications, equivalents, substitutes involved in the scope and the technological range of the present invention. Like reference numerals are used for referring to the same or similar elements in the description and drawings.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which example embodiments belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, exemplary embodiments of the present invention will be described in detail with reference to the accompanying drawings.

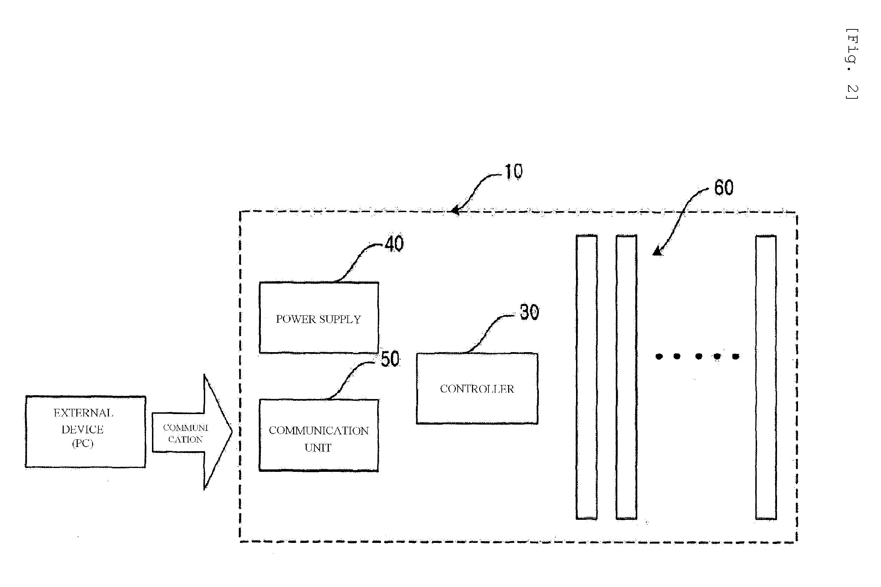

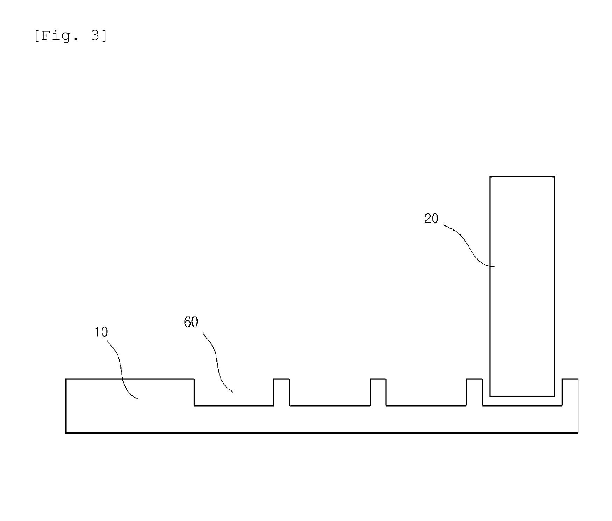

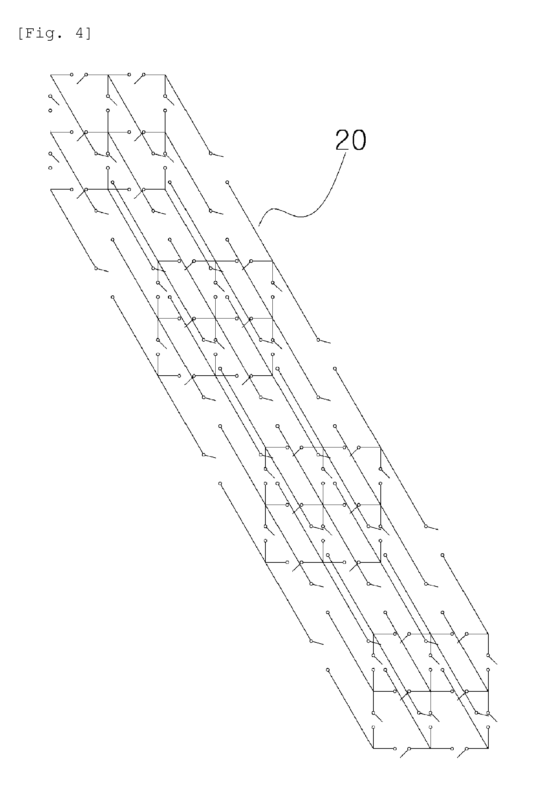

Referring to FIGS. 2 to 7, a system for controlling sounds and images through a three-dimensional matrix circuit according to an embodiment of the present invention may include a matrix circuit 20, a controller 30, a power supply 40, a communication unit 50, a plurality of expansion slots 60, and a main board 10, but the present invention is not limited thereto. The matrix circuit 20 may variously connect amplifiers and speakers to each other, to which voice or sound signals outputted from sound generators such as microphones, DVD players, and audio equipment are delivered, and may be three-dimensionally implemented so as to variously connect display devices to which image and sound signals outputted from image transmission devices such as DVD players, Blueray players, and camcorders are delivered. The controller 30 may control the matrix circuit 20 by a multicast method through the operation of a mouse or a keyboard by a user such that amplifiers or a combination thereof to be used for broadcasting and a combination of the image transmission devices and the display devices to be used for broadcasting are selected. The power supply 40 may supply power to the system. The communication unit 50 may take charge of duplex communication with an external device such as a personal computer. The plurality of expansion slots 60 may take charge of input/output connection according to the field situation. The main board 10 may be mounted with various parts such as the matrix circuit 20, the controller 30, the power supply 40, and the communication unit 50, and may enable interconnection and communication of the expansion slots 60.

The main board 10 may be a basic board for an additional coupling of the expansion slot 60, and may be mounted with various kinds of parts to be assembled into a case.

In this case, the matrix circuit 20 may be three-dimensionally implemented such that the change and addition of the input/output are enabled according to a user's selection. Since the matrix circuit 20 is implemented into a slot type, the matrix circuit 20 may be directly inserted into the expansion slot 60. Also, when an expansion board is mounted in the expansion slot 60, the matrix circuit 20 may be attached to the expansion board so as to increase in size.

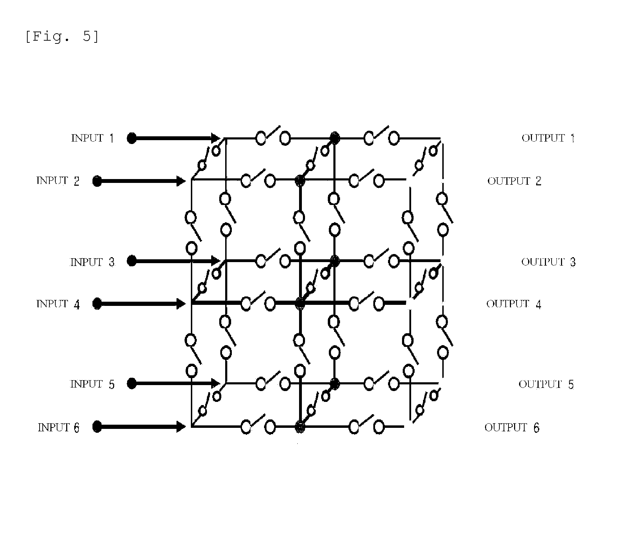

Also, as shown in FIG. 5, the 6x6 three-dimensional matrix circuit 20 may have 33 relays (or switches), which are three fewer than the relays used in a typical 6x6 matrix circuit.

Actually, the number of relays used in a 8x8 three-dimensional matrix circuit or a 10x10 three-dimensional matrix circuit is significantly different from the number of relays used in a typical flat matrix circuit. Also, the output of the three-dimensional matrix circuit can be additionally expanded from any terminal. (e.g., FIGS.5A to F)

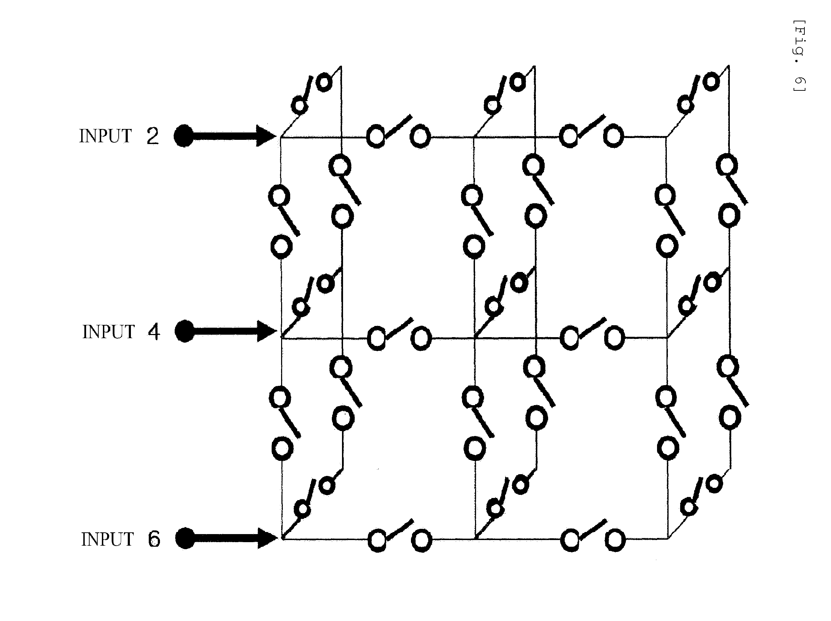

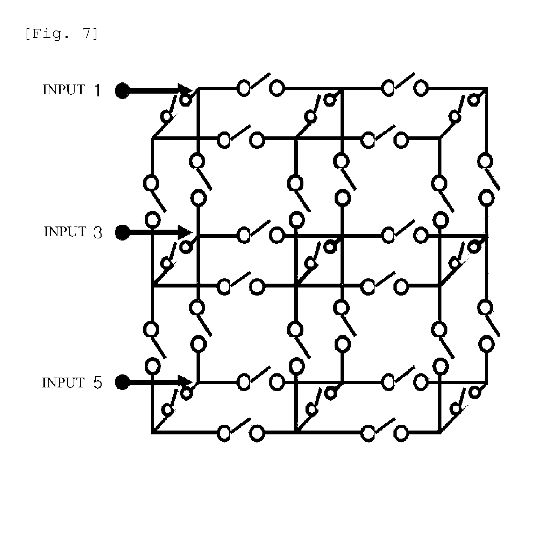

As shown in FIGS. 6 and 7, the three-dimensional matrix circuit 20 may extensively change and add the input and the output according to a convenience of a user instead of fixed selection of the input and the output.

Accordingly, the number of parts, particularly, relays can be significantly reduced through the three-dimensional matrix circuit 20, and the input and the output of the three-dimensional matrix circuit 20 can be more variously utilized so as to organically change the connection between the amplifiers and the speakers and the connection between the image transmission device and the display device.

Meanwhile, the controller 30 may efficiently perform data management according to the GUI setting in the GUI environment.

Hereinafter, an operation of a sound and image control system through a three-dimensional matrix circuit according to an embodiment of the present invention will be described in more detail with reference to the accompanying drawings.

Referring to FIGS. 2 to 7, the sound and image control system through the three-dimensional matrix circuit according to the embodiment may allow voice or sound signals outputted from the sound generator while being amplified by a plurality of amplifiers, and may allow a user to easily control the connection of the amplifiers and speakers by a multicast method in the GUI environment using the matrix circuit 20 instead of a mechanical connection control method of the amplifiers and speaker, which is manual and complicated.

Also, the matrix circuit 20 may variously connect image and sound signals outputted from a plurality of display transmission devices to display devices such as TV through a plurality of channels in addition to the connection between the amplifiers and speakers.

In this case, a user may be allowed to control the connection of the amplifiers and the speakers or the connection of the image transmission devices and the display devices on a personal computer or by an individual or group unit. Also, each controller for controlling speakers or display devices may be endowed with a unique identification, performing a duplex communication with the personal computer through the communication unit 50 and thus confirming whether or not there is an abnormality of the controller 30 including the matrix circuit 20. Thus, the maintenance of the system can be easily performed, and a malfunction caused by a failure can be maximally inhibited.

Also, the matrix circuit 20 may be manufactured in a slot type in consideration of the expandability according to the field situation. The MxN typed matrix circuit 20 may allow a plurality of amplifiers and speakers and a plurality of image transmission devices and display devices to be connected to each other in various manners. A user may control the relays (or switches) through a manual method or GUI environment to set or control the connection of necessary amplifiers and speakers and the connection of necessary image transmission devices and display devices.

In this case, the matrix circuit 20 that provides an optimal broadcasting path by selecting necessary amplifiers and speaker or necessary image transmission devices and display devices for broadcasting may be automatically controlled by the controller 30. The controller 30 that controls the speakers may be connected to the personal computer through the communication unit 50, and may allow a user to control and monitor the speakers by the personal computer from a remote place through Internet.

Thus, the sound and image control system through the three-dimensional matrix circuit according to the embodiment of the present invention may be usefully applied to broadcasting equipment of public offices, apartments, large-size or complex shopping buildings, and other general buildings in addition to school broadcasting equipment. While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A system for controlling sounds and images through three-dimensional matrix circuit, which outputs voice or sound signals outputted from a sound generator and amplified by a plurality of amplifiers through a plurality of speakers, the system comprising:
a matrix circuit configured in a three-dimensional type such that the amplifiers and the speakers to which the voice or sound signals outputted from the sound generator are delivered are connected to each other, changing and adding input/output according to a user's selection;
a controller for controlling various kinds of operations of the speakers and the amplifiers by allowing a user to control the matrix circuit by a multicast method so as to select amplifiers or a combination thereof to be used for broadcasting using a keyboard or a mouse.

2. A system for controlling sounds and images through three-dimensional matrix circuit, which outputs image and sound signals outputted from a plurality of image transmission devices through a plurality display devices, the system comprising:
a matrix circuit three-dimensionally implementing a connection between the display devices to which the image and sound signals outputted from the image transmission device are delivered and changing and adding input/output according to a user's selection;
a controller for controlling operations of the system by allowing a user to control the matrix circuit by a multicast method so as to select a combination of the image transmission devices and the display devices to be used for broadcasting using a keyboard or a mouse.

3. The system of claim 1 or 2, comprising:
a power supply for supplying power to the system;
a communication unit taking charge of duplex communication with an external device;
a plurality of expansion slots taking charge of input/output connection according to a field situation;
a main board mounted with various kinds of parts comprising the matrix circuit, the controller, the power supply, and the communication unit and enabling an interconnection and communication of the expansion slots.

4. The system of claim 1 or 2, wherein the matrix circuit is manufactured into a slot type, and the plurality of expansion slots taking charge of input/output connection according to a field situation are mounted with an expansion board, in which a size of the matrix circuit increases or decreases according to a user's selection.

5. The system of claim 1 or 2, wherein the communication unit taking charge of duplex communication with an external device checks whether or not there is an abnormality of the controller comprising the matrix circuit by performing duplex communication with a personal computer.
